# EUROPÄISCHE PATENTSCHRIFT

(11) **EP 0 310 736 B1**
(45) Veröffentlichungstag und Bekanntmachung des Hinweises auf die Patenterteilung: **22.01.1997**
(21) Anmeldenummer: 88102120.8
(22) Anmeldetag: 06.07.1982
(51) Int. Cl.: H01G 9/04, C25F 3/04, C25D 11/04, C23G 1/12, C25F 1/04

(54) **Verfahren zum Herstellen einer Elektrodenfolie für insbesondere Niedervolt-Elektrolytkondensatoren**
Method of making an electrode foil, especially for low voltage electrolytic capacitors
Procédé de fabrication d'une feuille pour électrode, en particulier pour condensateurs électrolytiques basse-tension

(30) Priorität: 09.07.1981 DE 3127161
(43) Veröffentlichungstag der Anmeldung: 12.04.1989
(62) Teilanmeldung aus: 82106041.5
(73) Patentinhaber: SIEMENS AKTIENGESELLSCHAFT, 80333 München (DE)
(72) Erfinder: Löcher, Günter, Dipl.-Phys., D-7921 Nattheim (DE); Sarkar, Harimohan, Dr. Dipl.-Phys., D-7920 Heidenheim (DE)

(56) Entgegenhaltungen:
- DE-A- 1 446 323
- DE-C- 879 571
- DE-C- 914 042
- FR-A- 1 521 952
- US-A- 4 198 278
- CHEMICAL ABSTRACTS, Band 73, Nr. 22, 30. November 1970, Seite 348, Zusammenfassung Nr. 114431d, Columbus, Ohio, US; & JP-A-70 14 652

## Beschreibung

Die Erfindung betrifft ein Verfahren zum Herstellen einer Elektrodenfolie für insbesondere Niedervolt-Elektrolytkondensatoren gemäß dem Oberbegriff des Patentanspruchs 1.

Ein derartiges Verfahren ist aus der DE-A-1 446 323 bekannt. Dort erfolgt eine Beizung in einer Lösung von Fluorwasserstoff und gegebenenfalls Natriumsilicofluorid, d.h. in einem sehr agressiven Medium. Die eigentliche Aufrauhung erfolgt in Salzsäure, was hinsichtlich des Korrisionsverhaltens, insbesondere der für den Ätztank erforderlichen Materialien problematisch ist. Weiterhin wird dort vorgeschlagen, zwischen der Beizung und der Ätzung die Folie in einem Bad zu behandeln, wobei Fremdmetalle auf der Aluminiumoberfläche abgeschieden werden. Dieser Verfahrensschritt ist ebenfalls problematisch, da hierdurch unerwünschte Effekte bei der eigentlichen Ätzung auftreten können.

Aus der DE-A-16 14 274 ist die Verwendung von walzharter Folie als Ausgangsmaterial bekannt, d.h. einer Folie, die vor der Verarbeitung nicht durch eine Temperaturbehandlung getempert wurde. Derartige Folien zeichnen sich dadurch aus, daß sich wesentlich höhere Aufrauhgrade als mit getemperter Folie erzielen lassen. Höhere Aufrauhgrade bedeuten aber höhere spezifische Kapazitäten, so daß sich mit höher aufgerauhten Elektrodenfolien Elektrolytkondensatoren kleinerer Abmessungen herstellen lassen.

Allerdings tritt bei der Verarbeitung walzharter Aluminiumfolien die Schwierigkeit auf, daß die mechanische Stabilität der geätzten Folie ungenügend ist. Die Aluminiumfolien sind derart spröde, daß eine wirtschaftliche Verarbeitung in der herkömmlichen Fertigung, d.h. in einem kontinuierlichen, kombinierten Ätz- und Formierbetrieb, nicht möglich ist.

So ist bei dem genannten Stand der Technik gemäß DE-A-16 14 274 vorgeschlagen worden, die Folie nach einer Beiz- jedoch vor der Ätzbehandlung einer thermischen Behandlung zu unterziehen. Dadurch wird jedoch ein kontinuierlicher Fertigungsprozeß unterbrochen und es tritt die Schwierigkeit auf, daß die thermisch zu behandelnde Folie nach dem Beizvorgang besonders gut gereinigt werden muß, damit durch die Temperaturbehandlung nicht unerwünschte oxidische Fehlstellen entstehen können.

Aufgabe der Erfindung ist es deshalb, ein Verfahren zum Herstellen einer Elektrodenfolie der eingangs genannten Art anzugeben, bei dem eine kostengünstige Herstellung der Folien mit hohem Aufrauhgrad und gleichzeitiger guter mechanischer Stabilität im kontinuierlichen, kombinierten Ätz- und Formierprozeß erreicht wird.

Diese Aufgabe wird erfindungsgemäß mit den im kennzeichnenden Teil des Patentanspruchs 1 angeführten Merkmalen gelöst.

Zweckmäßige Weiterbildungen des erfindungsgemäßen Verfahrens sind in den Unteransprüchen angegeben.

Die Vorteile der Erfindung werden anhand der folgenden Ausführungsbeispiele näher erläutert.

Als Ausgangsmaterial wird dabei eine walzharte Aluminiumfolie der Reinheit 99,99 verwendet. Zur Erzielung einer gleichförmigen, für die folgende Ätzung aktiven Oberfläche wird die walzharte Aluminiumfolie unmittelbar vor dem Ätzen in einem Tank durch chemisches und/oder elektrochemisches Beizen von Walzrückständen und der natürlichen Oxidschicht befreit. Dieser Beizvorgang ist deshalb wichtig, weil Verunreinigungen auf der Oberfläche der Aluminiumfolien als "aktive" Stellen wirken, so daß die Folie bei der Ätzung an diesen Stellen bevorzugt angegriffen wird.

Die Beizung kann chemisch und/oder elektrochemisch erfolgen, wobei zum chemischen Beizen wäßrige Lösungen von Salzsäure,

Schwefelsäure, Aluminium-Chlorid oder ein Gemisch von Phosphor-und Chromsäure geeignet sind. Bei der Verwendung von Phosphor-und Chromsäure ist nach dem Beizvorgang eine Spülung in destilliertem Wasser erforderlich, damit nicht unerwünschte Ionen in das Ätzbad verschleppt werden. Die Temperaturen der Beizlösungen können zwischen 30 und 100°C betragen, wobei die Behandlungsdauer zwischen 30 Sekunden und 10 Minuten variiert.

Für einen elektrochemischen Beizvorgang eignet sich beispielsweise eine wäßrige Chloridlösung, deren Kationen Aluminium sowie Alkali- oder Erdalkalielemente sein können. Es ist dabei mit einer Stromdichte zu beizen, die kleiner oder gleich der maximalen Passiv-Stromdichte des Aluminiums in der jeweiligen Lösung ist. Die Passiv-Stromdichte ist dabei als die Stromdichte definiert, die sich bei Anodenpotentialen unterhalb des Lochfraßpotentials des Aluminiums einstellt, so daß kein Lochfraß auftreten kann. Es wird somit eine Oberflächenreinigung bewirkt, ohne daß das Aluminium angegriffen wird, sondern nur die Verunreinigungen und ggf. eine Aluminiumoxid-Schicht (Luftoxid-Schicht, Oxidhydrate) entfernt wird. Die Passiv-Stromdichte ist dabei von der Chloridkonzentration der jeweiligen Beizlösung abhängig und nimmt mit steigender Temperatur zu. Für das elektrochemische Beizen sind Badtemperaturen nahe dem Kochpunkt, vorzugsweise 95°C, vorteilhaft, wobei die Behandlungsdauer eine bis 10 Minuten beträgt.

Nach dem Beizen wird die Aluminiumfolie, ggf. nach einer Zwischenspülung in destilliertem Wasser, mit einer elektrolytischen Ätzlösung aufgerauht, die Aluminiumchlorid und zusätlich Sulfat-und/oder Borat-Ionen enthält.

Die Temperatur des Ätzbades liegt zwichen 60 und 100°C, vorzugsweise bei ca. 95°C. Die elektrolytische Ätzung erfolgt mit Gleichstrom (max. Welligkeit von 5 %) bei einer Ätzstromdichte von ca. 0,1 bis 1 A/cm². Die Ätzstromdichte richtet sich nach der vorgesehenen Nennspannung des Elektrolytkondensators. So sind für höhere Nennspannungen niedrigere Ätzstromdichten anzuwenden.

Anschließend wird die Aluminiumfolie noch in einem oder mehreren Arbeitsgängen mit vollentsalztem Wasser bei Temperaturen zwischen 15 und 40°C behandelt, damit auch letzte Reste der verwendeten Badlösungen entfernt werden.

Nach dem Passieren der Spülstufen durchläuft die Aluminiumfolie eine herkömmliche Formieranlage zum Aufbringen des Dielektrikums durch anodische Oxidation. Es ist möglich, die Folie vor Beendigung der Formierung einer Temperaturbehandlung zu unterziehen, wodurch eine weitere Erhöhung der Biegefestigkeit erreicht wird.

In der folgenden Tabelle sind für erfindungsgemäß hergestellte Elektrodenfolien verschiedener Nenn-Formierspannungen (U_{N} bzw. U_{F}) die dynamische Festigkeit, die Biegewechselanzahl (BW) sowie die gemessene spezifische Kapazität (C_{eff}), sowie der Kapazitätsgewinn gegeüber den üblichen Niedervolt-Elektrodenfolien angegeben.

| U_{N} | U_{F} | Dyn. Fest. | BW | C_{eff} | Kap.-Gewinn |
|---|---|---|---|---|---|
| V | V | N x cm | | µF/cm² | % |
| 7,5 | 12,5 | 12 | 45 | 25,0 | 33 |
| 25 | 40 | 12 | 39 | 7,5 | 33 |
| 63 | 97 | 8 | 15 | 2,22 | 25 |
| 100 | 152 | 6 | 15 | 0,92 | 13 |

Nach dem Ätzen wird die aufgerauhte Aluminiumfolie in einer wäßrigen Lösung, die Nitrat-Ionen enthält, gespült. Dies ist erforderlich, damit anhaftende Chlorid-Ionen von der Aluminiumfolie entfernt werden; vorhandene Chloride beeinträchtigen nämlich die elektrischen Werte des Elektrolytkondensators in ungünster Weise. Die Temperatur der Spüllösung kann zwischen 40 und 100 °C betragen, wobei zu beachten ist, daß mit zunehmender Temperatur und Behandlungsdauer die Aluminium-Abtragsrate in Abhängigkeit vom pH-Wert der jeweils eingesetzten Spüllösung zunimmt. Diese Parameter sind so zu wählen, daß der Aluminium-Abtrag während der Spülung höchstens 1 mg/cm² beträgt.

Der Tabelle ist zu entnehmen, daß durch das erfindungsgemäße Verfahren mechanisch ausreichend verarbeitbare Eletkrodenfolien erhalten werden, welche zusätzlich gegenüber den herkömmlichen vorgeglühten Folien Kapazitätserhöhungen von 13 bis 33 % aufweisen.

Das erfindungsgemäße Verfahren eignet sich in bevorzugter Weise dafür, als Wanderbadverfahren eingesetzt zu werden, wobei die walzharte Folie von einer Vorratsrolle abgewickelt wird, die verschiedene Behandlungsbäder durchläuft und zum Schluß als fertigformierte Elektrodenfolie aufgewickelt wird, um später zu Elektrolytkondensatoren verarbeitet zu werden.

## Patentansprüche

1. Verfahren zum Herstellen einer Elektrodenfolie für insbesondere Niedervolt-Elektrolytkondensatoren, indem als Ausgangsmaterial Aluminiumfolie verwendet wird, wobei die Folie chemisch oder elektrochemisch gebeizt und anschließend in einer Chlorid-Ionen enthaltenen Ätzlösung aufgerauht und in destilliertem Wasser gespült wird, **dadurch gekennzeichnet**, daß eine walzharte Folie verwendet wird, die in einer Ätzlösung mit Gleichstrom der maximalen Welligkeit von 5% aufgerauht wird, daß die Ätzlösung Aluminiumchlorid und zusätzlich Sulfat- und/oder Borat-Ionen enthält, daß die Folie einer Formierbehandlung unterzogen wird, und daß die Folie vor Beendigung der Formierung einer Temperaturbehandlung unterzogen wird.

2. Verfahren nach Anspruch 1, **dadurch gekennzeichnet**, daß die Folie in einer wäßrigen Lösung chemisch gebeizt wird, die Salzsäure und/oder Schwefelsäure oder ein Gemisch aus Phosphor- und Chromsäure enthält.

3. Verfahren nach Anspruch 1, **dadurch gekennzeichnet**, daß die Folie in einer wäßrigen Chloridlösung elektrochemisch gebeizt wird.

4. Verfahren nach einem der Ansprüche 1 bis 3, **dadurch gekennzeichnet**, daß die Temperatur des Ätzbades zwischen 60 und 100°C, vorzugsweise ca. 95°C beträgt.

5. Verfahren nach einem der Ansprüche 1 bis 4, **dadurch gekennzeichnet**, daß die Ätzstromdichte ca. 0,1 bis 1 A/cm² beträgt.

## Claims

1. Method for making an electrode foil, especially for low-voltage electrolytic capacitors, by using aluminium foil as starting material, the foil being chemically or electrochemically pickled and then grained in a chloride-ion-containing etching solution and rinsed in distilled water, characterized in that an as-rolled foil is used which is grained in an etching solution using direct current with a maximum ripple of 5%, in that the etching solution contains aluminium chloride and, in addition, sulphate ions and/or borate ions, in that the foil is subjected to a forming treatment, and in that the foil is subjected to a heat treatment before the forming is completed.

2. Method according to Claim 1, characterized in that the foil is chemically pickled in an aqueous solution which contains hydrochloric acid and/or sulphuric acid or a mixture of phosphoric acid and chromic acid.

3. Method according to Claim 1, characterized in that the foil is electrochemically pickled in an aqueous chloride solution.

4. Method according to one of Claims 1 to 3, characterized in that the temperature of the etching bath is between 60 and 100°C, preferably approximately 95°C.

5. Method according to one of Claims 1 to 4, characterized in that the etching current density is approximately 0.1 to 1 A/cm².

## Revendications

1. Procédé de fabrication d'une feuille servant d'électrode, notamment pour des condensateurs électrolytiques basse tension, qui consiste à utiliser comme matière première une feuille d'aluminium, la feuille étant attaquée chimiquement ou électrochimiquement, et ensuite rendue rugueuse dans une solution d'attaque chimique contenant des ions chlorure et rincée dans de l'eau distillée, caractérisé en ce qu'il consiste à utiliser une feuille ayant la dureté obtenue par laminage que l'on rend rugueuse dans une solution d'attaque chimique par un courant continu d'une ondulation maximum de 5 %, en ce que la solution d'attaque chimique contient du chlorure d'aluminium et en plus des ions sulfate et/ou borate, en ce qu'il consiste à soumettre la feuille à un traitement de formage et en ce qu'il consiste à soumettre la feuille à un traitement en température avant que le formage soit achevé.

2. Procédé suivant la revendication 1, caractérisé en ce qu'il consiste à attaquer la feuille chimiquement dans une solution aqueuse qui renferme de l'acide chlorhydrique et/ou de l'acide sulfurique ou un mélange d'acide phosphorique et d'acide chromique.

3. Procédé suivant la revendication 1, caractérisé en ce qu'il consiste à attaquer la feuille électrochimiquement dans une solution aqueuse de chlorure.

4. Procédé suivant l'une des revendications 1 à 3, caractérisé en ce que la température du bain d'attaque chimique est comprise entre 60 et 100°C et est, de préférence, de 95°C environ.

5. Procédé suivant l'une des revendications 1 à 4, caractérisé en ce que la densité de courant lors de l'attaque chimique est de 0,1 à 1 A/cm² environ.
